# EUROPÄISCHE PATENTANMELDUNG

(11) **EP 1 002 455 A2**
(43) Veröffentlichungstag der Anmeldung: **24.05.2000**
(21) Anmeldenummer: 99122102.9
(22) Anmeldetag: 05.11.1999
(51) Int. Cl.: A01B 69/00

(54) **Verfahren zum Justieren einer an einer Feldmaschine befestigten Sensoreinheit und Justiereinrichtung**

(30) Priorität: 18.11.1998 DE 19853085
(71) Anmelder: CLAAS Selbstfahrende Erntemaschinen GmbH, 33428 Harsewinkel (DE)
(72) Erfinder: Homburg, Helmut, 33428 Harsewinkel (DE); Huster, Jochen, 33330 Gütersloh (DE)
(74) Vertreter: Weeg, Thomas

(57) **Zusammenfassung**

Die Erfindung bezieht sich auf ein Verfahren zum Justieren einer an einer Feldmaschine befestigten Sensoreinheit und auf eine Justiereinrichtung. Die Sensoreinheit (1) ist über einen Tragarm (10) an einem Schneidwerk (3) einer Feldmaschine befestigt. Durch ein zweidimensionales Anzeigefeld (24) kann auf einfache Weise die aktuelle Lage bzw. Ausrichtung der Sensoreinheit (1) zu einer Feldbearbeitungskante angezeigt werden. Durch Verstellung der Sensoreinheit (1) in horizontaler und/oder vertikaler Richtung kann dieselbe einfach in die gewünschte Justierlage verbracht und festgelegt werden.

## Beschreibung

Die Erfindung betrifft ein Verfahren zum Justieren an einer Feldmaschine befestigten Sensoreinheit nach dem Oberbegriff des Patentanspruchs 1 und eine Justiereinrichtung nach dem Oberbegriff des Patentanspruchs 6.

Aus der US-PS 3 991 618 ist eine Vorrichtung zur Erkennung einer Feldbearbeitungskante bekannt, bei der eine Sensoreinheit eine Mehrzahl von Sensoren aufweist, die im Bereich des Bodens verteilt an mehreren Stellen einer Erntemaschine an derselben befestigt sind. Die Sensoren befinden sich zum einen an einem vorderen Ende und zum anderen an einem hinteren Ende der Erntemaschine. Die Sensoren sind als berührende Sensoren mit einem Fühlerarm ausgebildet, der das Vorhandensein oder Nichtvorhandensein eines Erntegutes detektiert. Das von den Sensoren erzeugte Sensorsignal wirkt auf eine Lenksteuereinheit, die ein selbsttätiges Bewegen der Erntemaschine entlang der Feldbearbeitungskante ermöglicht. Nachteilig an der bekannten Vorrichtung ist, daß eine Mehrzahl von an unterschiedlichen Orten angeordneten Sensoren vorgesehen sind, so daß die Vorrichtung relativ aufwendig ist. Infolge der mechanischen Beanspruchung unterliegen die Sensoren einem unerwünschten Verschleiß. Infolge der Anordnung der Sensoren in Bodennähe besteht das Risiko, daß die Sensoren durch unvorhergesehene äußere Einflüsse beschädigt werden können.

Aufgabe der vorliegenden Erfindung ist es daher, ein Verfahren zum Justieren einer an einer Feldmaschine befestigten Sensoreinheit derart anzugeben, daß die Justierlage der Sensoreinheit auf einfache Weise erkannt und eingestellt werden kann.

Zur Lösung dieser Aufgabe weist das erfindungsgemäße Verfahren die Merkmale des Patentanspruchs 1 auf.

Der besondere Vorteil des erfindungsgemäßen Verfahrens liegt darin, daß die Einstellung der Justierlage der Sensoreinheit auf einfache Weise unter Einschluß von für andere Zwecke eingesetzter elektronischer Mittel erkannt und festgelegt werden kann. Zum einen sind der Sensoreinheit Steilmittel zugeordnet, mittels derer die Sensoreinheit in der horizontalen und/oder vertikalen Richtung verstellt werden kann. Diese Stellmittel werden von einer zentralen Verarbeitungseinheit beaufschlagt. In dieser Verarbeitungseinheit wird das von der Sensoreinheit abgegebene Sensorsignal ausgewertet und in Abhängigkeit davon die Sensoreinheit weiterbewegt, bis sie in die durch Detektion eines Referenzpunktes bzw. einer Referenzlinie eine Justierlage erreicht hat.

Nach einer Weiterbildung des Verfahrens dient eine Anzeigeeinheit zur Überprüfung der einzunehmenden Justierlage des Anzeigefeld bzw. die Anordnung der Anzeigeelemente der Anzeigeeinheit sind derart auf die relative Lage der Feldmaschine zu der Feldbearbeitungskante abgestimmt, daß die Justierlage durch Übereinstimmung eines durch das Sensorsignal angesteuerten Anzeigeelementes zu einer vorgegebenen Kennung erkannt wird. Die angesteuerten Anzeigeelemente signalisieren die von der Sensoreinheit erfaßte aktuelle Stelle des Bodens. Die Kennung signalisiert die durch den Referenzpunkt bzw. Referenzlinie gekennzeichnete Justierlage der Sensoreinheit. Vorzugsweise liegt die Kennung in einem zentralen Bereich der Anzeigeeinheit, so daß die Justierlage einfach erkennbar und überprüfbar ist.

Aufgabe der vorliegenden Erfindung ist es ferner, eine Justiereinrichtung für eine Sensoreinheit anzugeben, die einfach und zuverlässig eine dauerhafte Festlegung der Sensoreinheit bezüglich eines Referenzpunktes der Feldmaschine ermöglicht.

Zur Lösung dieser Aufgabe weist die erfindungsgemäße Justiereinrichtung die Merkmale des Patentanspruchs 6 auf.

Der Vorteil der erfindungsgemäßen Justiereinrichtung besteht insbesondere darin, daß mittels einer optischen Anzeigeeinheit die Justierung der Sensoreinheit auf der Feldmaschine einfach handhabbar ist.

Nach einer Ausgestaltung der Justiereinrichtung weist die Anzeigeeinheit mehrerer in einer Reihe angeordnete Anzeigeelemente auf, wobei mindestens zwei Reihen von Anzeigeelementen voneinander beabstandet sind. Die Sollage der Sensoreinheit ist dann gegeben, wenn zueinander gekehrte endseitige Anzeigeelemente der Reihen aufleuchten. Die Sollage der Sensoreinheit wird somit durch die Anzeigeelemente dadurch angezeigt, daß die aufleuchtenden Anzeigeelemente einen möglichst geringen Abstand zueinander aufweisen.

Nach einer Ausgestaltung der Erfindung korrespondieren die Reihen der Anzeigeelemente zu der Anzahl der möglichen Verstellrichtungen der Sensoreinheit. Bei Kombination einer Ausrichtung in einer horizontalen Ebene einerseits und in einer vertikalen Ebene andererseits ergeben sich jeweils zwei Bewegungskomponenten, die jeweils durch eine Reihe von Anzeigeelementen symbolisiert sind.

Nach einer Ausgestaltung der Justiereinrichtung ist die Sensoreinheit über einen u-förmigen Ansatz an einem Tragarm der Feldmaschine in ihrer Lage einstellbar. Durch die axiale Anordnung der Bohrungen bzw. Befestigungsmittel an den gegenüberliegenden Enden des u-förmigen Ansatzes ist eine eindeutige und zuverlässige Verstellung um die hierdurch gebildete Schwenkachse möglich. Sofern die Sensoreinheit einen u-förmigen Ansatz aufweist, kann dieser zusammen mit dem Haltearm einen Hohlraum bilden, in dem die Sensoreinheit gelagert und vor Witterungeinflüssen geschützt ist.

Nach einer Ausgestaltung der Justiereinrichtung ist die Sensoreinheit koaxial zu einem aufrecht stehenden Tragarm der Erntemaschine verdrehbar gelagert, wobei mindestens eine Reihe der Anzeigeelemente sich in axialer Richtung zum Tragarm erstrecken. Hierdurch wird die Zuordnung zu der Bewegungsrichtung und somit das Ablesen der Anzeigeeinheit erleichtert.

Nach einer Ausgestaltung der Justiereinrichtung ist die Sensoreinheit an einem quer zur Fahrtrichtung sich erstreckenden Haltearm gehaltert. Bei Lösen der Sensoreinheit kann diese gleichzeitig geradlinig entlang des Haltearms verschoben und um denselben verdreht werden.

Weitere Vorteile der Erfindung ergeben sich aus den weiteren Unteransprüchen.

Zwei Ausführungsbeispiele der Erfindung werden nachfolgend anhand der Zeichnungen näher erläutert.

Es zeigen:
- Figur 1: eine Draufsicht auf eine Erntemaschine mit einer Sensoreinheit während der Ernte,
- Figur 2: eine Seitenansicht einer an einem Schneidwerk der Erntemaschine befestigten Sensoreinheit nach einem ersten Ausführungsbeispiel,

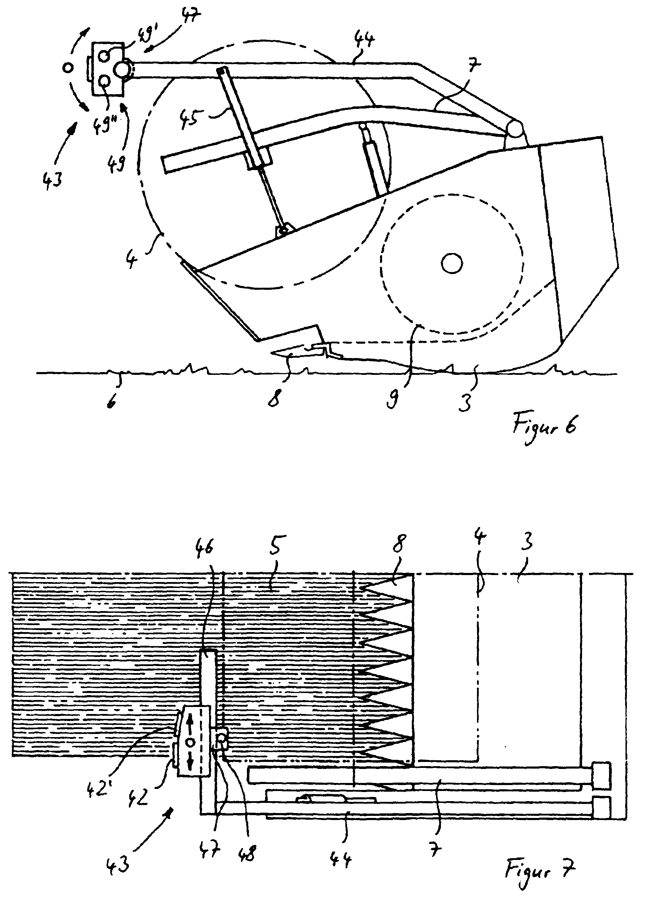

- Figur 3: eine Rückansicht der Sensoreinheit nach Figur 2,
- Figur 4: eine vergrößerte Darstellung einer Sensoreinheit aus Figur 3,
- Figur 5: eine Anbringung der erfindungsgemäßen Sensoreinheit an einen Ackerschlepper,
- Figur 6: eine Seitenansicht einer an einem Schneidwerk der Erntemaschine angeordneten Sensoreinheit nach einem zweiten Ausführungsbeispiel,
- Figur 7: eine Draufsicht der Sensoreinheit nach Figur 6,
- Figur 8: ein Blockschaltbild von mit der Sensoreinheit verbundenen Baueinheiten und
- Figur 9: ein Blockschaltbild von mit der Sensoreinheit verbundenen Baueinheiten bei Regelung einer Lenkung.

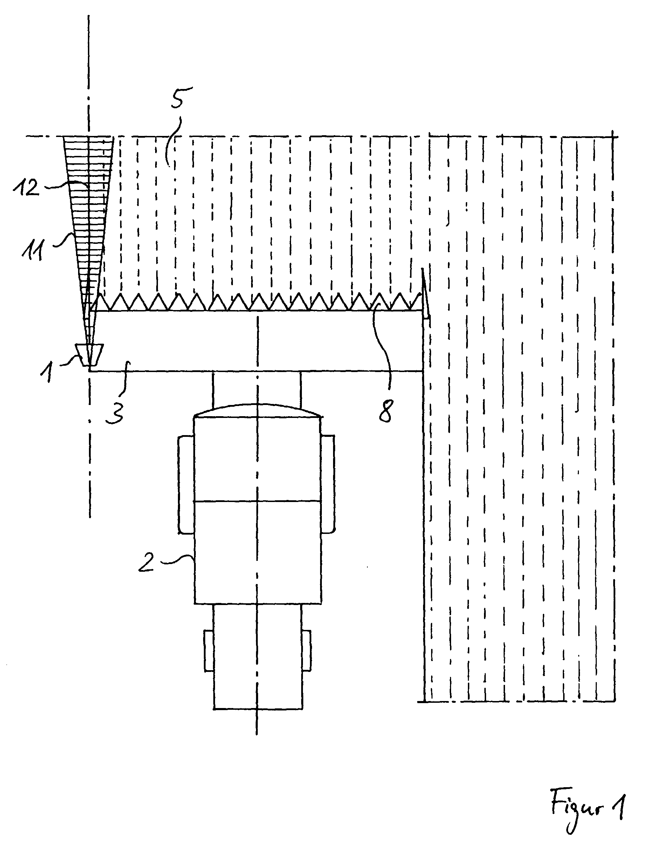

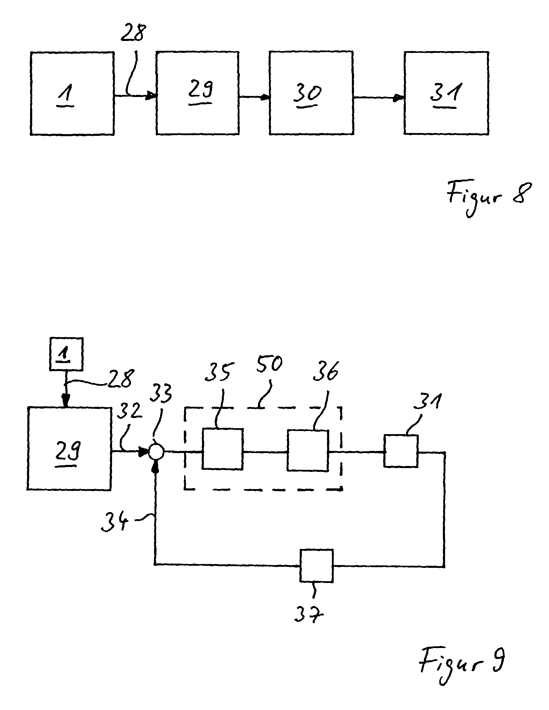

Die erfindungsgemäße Vorrichtung kann zur Erkennung von Kanten während der Feldbearbeitung eingesetzt werden. Sie kann zum einen bei Erntemaschinen zur Erkennung einer Feldbearbeitungskante und zum anderen bei Zugmaschinen zum Erkennen einer Feldbearbeitungskante eingesetzt werden, siehe Figur 1 und Figur 5.

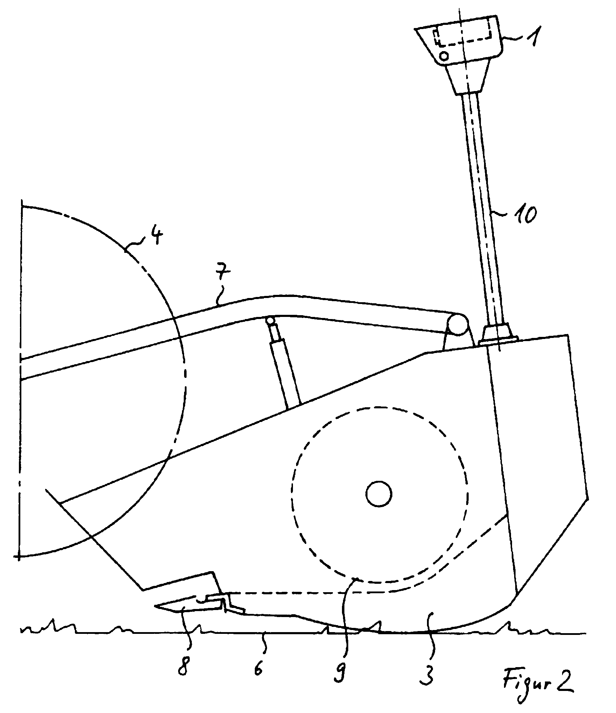

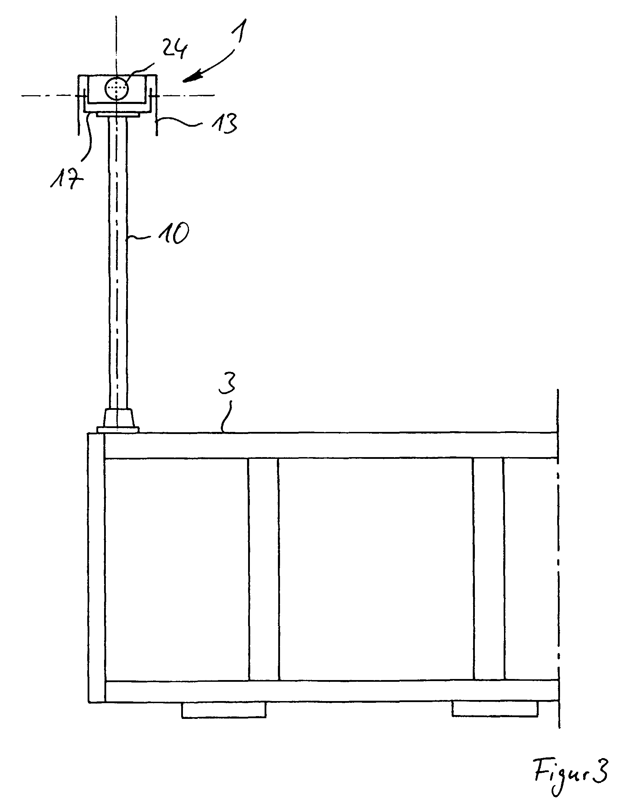

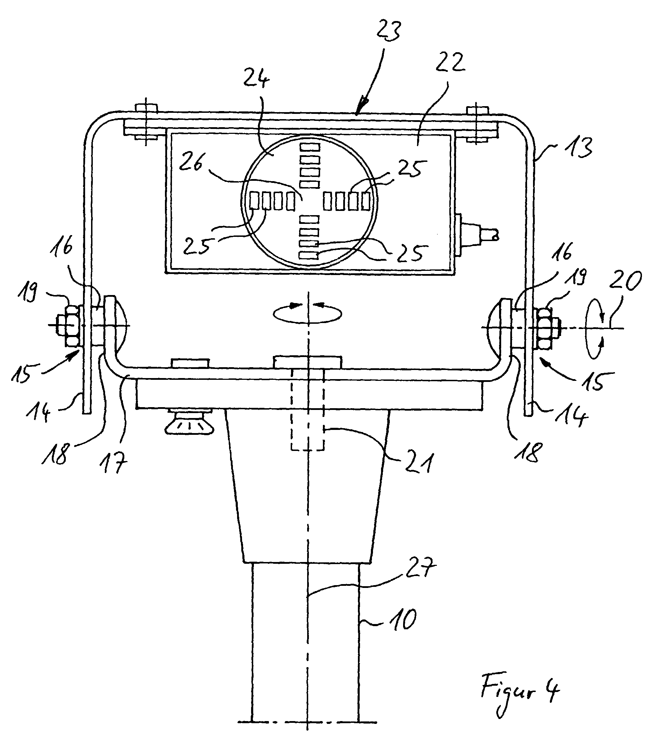

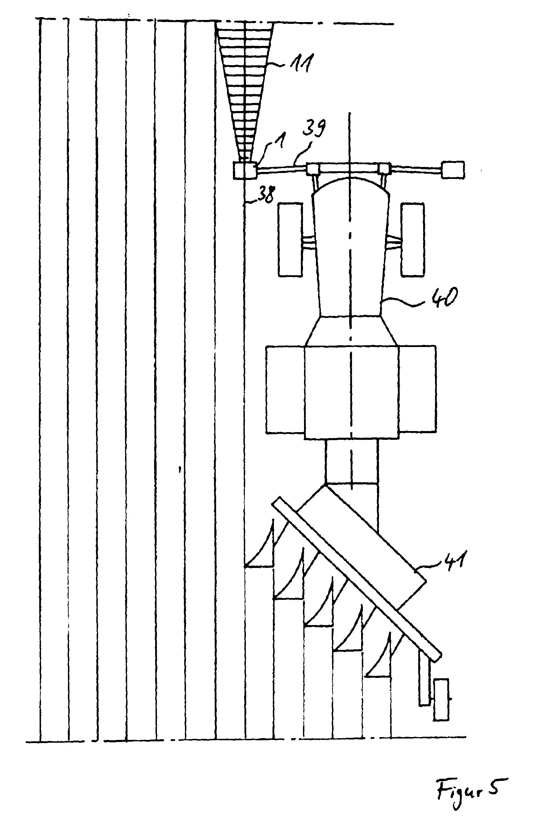

Nach einer ersten Ausführungsform ist eine Sensoreinheit 1 an einem Mähdrescher 2 als selbstfahrende Erntemaschine befestigt. Die Sensoreinheit 1 ist in Fahrtrichtung vorne links an einem Schneidwerk 3 des Mähdreschers 2 befestigt. Wie aus Figur 2 zu ersehen ist, weist der Mähdrescher 2 eine Haspel 4 auf, mittels derer das Erntegut 5 in Richtung einer Einzugswalze 9 gefördert wird. Die Haspel 4 ist über einen Haspeltragarm 7 schwenkbar verbunden. In einem unteren Bereich des Schneidwerkes 3 ist zwischen der Haspel 4 und der Einzugswalze 9 ein Messer 8 angeordnet.

In einem hinteren Bereich des Schneidwerks 3 ist ein nach oben abragender Tragarm 10 angeordnet, an dessen freien Ende die Sensoreinheit 1 befestigt ist. Der Tragarm 10 ist bezüglich einer Vertikalen in einem spitzen Winkel nach vorne geneigt ausgebildet, so daß die Justierung der Sensoreinheit 1 in Richtung einer Feldbearbeitungskante 12 erleichtert wird. Der Tragarm 10 weist eine solche Länge auf, daß die Sensoreinheit 1 über die Haspel 4 hinweg die Feldbearbeitungskante 12 detektieren kann.

Die Sensoreinheit 1 ist in Fahrtrichtung des Mähdreschers 2 ausgerichtet und weist einen abzutastenden Erfassungsbereich 11 auf.

Die Sensoreinheit 1 weist als optischen Sensor einen Lasersensor auf, der auf eine vorgegebene Entfernung eingestellt ist. Die zuvor eingestellte Entfernung, die in einem Bereich zwischen 12 und 16 m, vorzugsweise 14 m liegen kann, ist abhängig vom Lenkverhalten und der Fahrgeschwindigkeit des Mähdreschers 2. Ist die Sensoreinheit 1 auf eine zu große Entfernung eingestellt, wird eine Änderung der Feldbearbeitungskante 12 zu früh erkannt, mit der Wirkung, daß die Lenkung des Mähdreschers 2 zu früh anspricht und somit eine Übersteuerung gegeben ist. Ist die Entfernung zu gering eingestellt worden, wird eine Abweichung der Feldbearbeitungskante 12 zu spät erkannt, so daß die Lenkung des Mähdreschers 2 nicht rechtzeitig darauf reagieren kann.

Neben einer solchen Justierung der Sensoreinheit 1 in einer vertikalen Ebene ist auch eine Justierung derselben in einer horizontalen Ebene erforderlich. Denn die Feldbearbeitungskante 12 sollte in einem mittleren des von der Sensoreinheit 1 abzutastenden Erfassungsbereich 11 sein. Zu diesem Zweck ist eine Justiereinrichtung vorgesehen, mittels derer die Sensoreinheit 1 am Beginn einer Fahrt- bzw. am Beginn einer Erntesaison justiert werden kann.

Voraussetzung für eine ordnungsgemäße Justierung ist, daß der Mähdrescher 2 in Fahrtrichtung und parallel zu der vorgesehenen Feldbearbeitungskante 12 angeordnet ist. In dieser Startposition kann die Sensoreinheit 1 auf die Feldbearbeitungskante 12 einjustiert werden. Als Referenzpunkt für die Justierung der Sensoreinheit 1 kann eine vorhandene Feldbearbeitungskante 12 oder Randkante bzw. ein besonders gekennzeichneter Punkt des Mähdreschers 2 selbst sein. Bei Vorsehen eines Referenzpunktes an dem Mähdrescher 2 ist darauf zu achten, daß eine entsprechende Zwangsführung vorgesehen ist, die die Sensoreinheit aus der Justageposition in die Betriebsposition verbringt.

Die im folgenden beschriebene Justiereinrichtung orientiert sich an eine Feldbearbeitungskante 12. Die Justiereinrichtung ermöglicht eine verbesserte Schneidwerksauslastung, weil nach erfolgter Justierung der Sensoreinheit 1 der Mähdrescher 2 selbsttätig mit der seitlichen Kante des Schneidwerks 3 entlang der detektierten Feldbearbeitungskante 12 gelenkt wird. Durch die Justierung erfolgt das Schneiden unter optimaler Ausnutzung der Schneidwerksbreite.

Die Sensoreinheit 1 ist an einem rahmenartigen u-förmigen Ansatz 13 befestigt, der sich nach unten öffnend erstreckt. Freie Enden 14 des Ansatzes 13 weisen koaxial zueinander ausgerichtete Bohrungen 15 auf, in die jeweils Befestigungsmittel 16 zur Verschraubung mit einem an den Tragarm 10 befestigten weiteren u-förmigen Ansatz 17 eingreifbar sind. Der Ansatz 17 des Tragarms 10 weist aufrechte Lappen 18 auf, mit Bohrungen, die zu den Bohrungen 15 des Ansatzes 13 fluchten. Die Ansätze 13 und 17 sind jeweils an ihren Enden durch die Schrauben 16 kraftschlüssig miteinander verbunden. Durch Lösen einer Mutter 19 an den Enden 14 kann die Sensoreinheit 1 um eine durch die Bohrungen 15 laufende Schwenkachse 20 verschwenkt werden. Hierdurch wird eine Justierung der Sensoreinheit 1 in einer vertikalen Ebene ermöglicht.

Zur Ausrichtung der Sensoreinheit 1 in einer horizontalen Ebene ist der u-förmige Ansatz 17 mittels einer Schraubverbindung 21 an dem Tragarm 10 befestigt. Die Schraubverbindung 21 erstreckt sich in axialer Richtung des Tragarms 10 und ermöglicht beim in einer losen Stellung das Verdrehen des u-förmigen Ansatzes 17 in Umfangsrichtung des Tragarms 10. Dabei wird gleichzeitig der u-förmige Ansatz 13 der Sensoreinheit 1, die über die Schrauben 16 an den Tragarm 10 festgelegt sind, mitbewegt.

Die Ausrichtung der Sensoreinheit 1 kann durch das Betätigen der Befestigungsmittel 16 einerseits und der Schraubverbindung 21 andererseits unabhängig voneinander in der horizontalen und in der vertikalen Richtung erfolgen. Dies vereinfacht die Justierung, da diese Justierschritte nacheinander vorgenommen werden können.

Zur Anzeige einer vorgegebenen Justierstellung der Sensoreinheit 1 weist die Sensoreinheit 1 an einer Rückseite 22 eine Anzeigeeinheit 23 auf. Die Anzeigeeinheit 23 weist ein Anzeigefeld 24 mit vier Reihen von Anzeigeelementen 25 auf, wobei ein rechter Winkel von zwei Reihen von Anzeigeelemten 25 gebildet ist. Jede Reihe besteht aus vier Anzeigeelementen 25, die jeweils als Leuchtdioden (LED) ausgebildet sind. Die Anzeigeelemente 25 laufen auf einem gemeinsamen Mittelpunkt 26 zu, der einen Zielpunkt für die Justage der Sensoreinheit 1 bildet. Die Justage ist korrekt vorgenommen, wenn jeweils die dem Mittelpunkt 26 zugekehrten endseitigen Anzeigeelemente 25 aufleuchten. Das Anzeigefeld 24 ist nach Art eines Zielfernrohres ausgebildet und daher selbst erklärend für die Bedienperson.

Beim Verschwenken der Sensoreinheit 1 um die horizontale Schwenkachse 20 wandert das durch ein Anzeigeelement 25 beleuchtete Leuchtfeld entlang der koaxial zu einer Drehachse 27 angeordneten Reihen der Anzeigeelemente 25. Wird die Sensoreinheit 1 um die Drehachse 27 des Tragarms verschwenkt, wandert das Leuchtfeld in den horizontal verlaufenden Reihen der Anzeigeelemente 25. Die vertikal verlaufenden Anzeigeelemente 25 erstrecken sich parallel oder koaxial zu der Drehachse 27. Die horizontal verlaufenden Anzeigeelemente 25 erstrecken sich parallel zu der Schwenkachse 20. Während der Justierung befindet sich der Mähdrescher 2 in einer stehenden Position, wobei er an der als Erntegutkante ausgebildeten Feldbearbeitungskante 12 ausgerichtet ist.

Nachdem die Sensoreinheit 1 um die Schwenkachse 20 und danach um die Drehachse 27 oder umgekehrt derart verschwenkt worden ist, daß die zu dem Mittelpunkt 26 zugekehrten endseitigen Anzeigeelemente 25 aufleuchten, wird das Befestigungsmittel 16 bzw. die Schraubverbindung 21 betätigt, so daß sich die Sensoreinheit in der Justierlage festgelegt ist. Nachfolgend kann der Erntevorgang gestartet werden. Diese Justierung erfolgt vorzugsweise jeweils zu Beginn einer Erntesaison und kann jederzeit und leicht von einer Bedienperson vorgenommen werden.

Ein von der Sensoreinheit 1 geliefertes Sensorsignal 28 wird während der Fahrt des Mähdreschers 2 an eine Verarbeitungseinheit 29 übertragen. Diese ist vorzugsweise als elektronische Steuereinheit ausgebildet und weist ein Lenkprogramm auf, daß auf eine Lenksteuereinheit 30 einwirkt. Die Lenksteuereinheit 30 weist Steuerventile auf, mittels derer ein Lenkzylinder 31 betätigt wird. Wie aus Figur 8 zu ersehen ist, kann somit das Sensorsignal 28 zur Steuerung des Lenkzylinders 31 verwendet werden.

Alternativ kann das Sensorsignal 28 auch zur Regelung des Lenkzylinders 31 eingesetzt werden, siehe Figur 9. Zu diesem Zweck wird das Sensorsignal 28 in der Verarbeitungseinheit 29 nach einem vorgegebenen Lenkprogramm verarbeitet. Am Ausgang der Verarbeitungseinheit 29 liegt ein Sollwert 32 an, der auf einen Vergleicher 33 gegeben wird. Hier findet ein Vergleich mit einem Istwert 34 für den Lenkwinkel statt. Die sogenannte Regeldifferenz wird an den Eingang eines Reglers 35 gegeben, der vorzugsweise als digitaler Regler ausgebildet ist. Das Ausgangssignal des Reglers 35 wirkt auf ein oder mehrere Ventile 36 ein, die den Lenkzylinder 31 steuern. Der aktuelle Lenkwinkel des Lenkzylinders 31 wird detektiert und mittels eines Wandlers 37, der einen Meßumformer bzw. einen Analog-/Digitalwandler aufweisen kann, als Istwert 34 an die Vergleichsstelle 33 übertragen. Der Regler 35 und das Ventil 36 bilden einen Teil einer Lenkregeleinheit 50. Sie ermöglicht, daß der Lenkzylinder selbsttätig auf den von der Verarbeitungseinheit 29 vorgegebenen Sollenkwinkel geregelt wird. Hierdurch wird eine automatische Erntefahrt ermöglicht, wobei durch Erkennen der Erntegutkante mittels der Sensoreinheit 1 der Erntevorgang zuverlässig und zeitsparend bei optimaler Ausnutzung der Schnittbreite des Schneidwerkes 3 durchgeführt wird. Durch die Abstimmung der Sensoreinheit 1 zu der linksseitigen Kante des Schneidwerkes 3 kann die Erntegutkante 12 präzise erkannt und das Erntegut knappkantig abgeschnitten werden.

Nach einer alternativen Ausführungsform gemäß Figur 5 kann die Sensoreinheit 1 auch zum Erkennen einer durch eine Feldfurche gebildeten Feldkante 38 verwendet werden. Die Feldkante 38 bildet die Bearbeitungskante und kann aufgrund unterschiedlicher Höhe zu beiden Seiten der Kante 38 erkannt werden. Die Sensoreinheit 1 ist dabei an einem Haltearm 39 einer Zugmaschine bzw. Ackerschleppers 40 montiert, wobei sich der Haltearm 39 vor dem Ackerschlepper 40 quer zur Fahrtrichtung bzw. zur Feldkante 38 erstreckt. Die Sensoreinheit 1 ist lotrecht über der Feldkante 38 angeordnet und auf diese ausgerichtet. Der Ackerschlepper 40 zieht einen Pflug 41 hinter sich her. Bei diesem Ausführungsbeispiel ist die Anzeigeeinheit 23 in einer Fahrerkabine angeordnet und dient zur Überprüfung einer selbsttätigen Justierung, die beispielsweise mittels Betätigung eines Schalters durch den Fahrer in Gang gesetzt werden kann. Die selbsttätige Justierung erfolgt durch Verarbeitung und Auswertung des von der Sensoreinheit 1 erzeugten Sensorsignals. Dieses kann mittels eines elektrischen Kabels oder drahtlos an die zentrale Verarbeitungseinheit 29 des Ackerschleppers 40 übertragen werden. In der Verarbeitungseinheit 29 wird das aktuelle Sensorsignal, das eine bestimmte Stelle des abgetasteten Bodens 6 symbolisiert, verarbeitet. Dabei ist es erforderlich, daß der Ackerschlepper 40 parallel zu der Felkante 38 positioniert ist. Nach Ausrichten der Sensoreinheit 1 zu der Feldkante 38, wobei die Sensoreinheit 1 bzw. der Sensor parallel zur Feldkante 38 ausgerichtet ist bzw. eine vorgegebene Nullage einnimmt, hat die Sensoreinheit 1 die gesuchte Justierlage eingenommen. Die Sensoreinheit 1 kann nun in dieser Position festgelegt werden. Diese Justierlage wird durch Übereinstimmung eines die aktuelle Lage der Sensoreinheit 1 symbolisierenden aufleuchtenden Anzeigeelements 25 mit einer vorgegebenen Kennung überprüft. Diese Kennung befindet sich vorzugsweise in dem Mittelpunkt 26 der Anzeigeeinheit 23. In Abhängigkeit von der nun eingestellten Lage der Sensoreinheit 1 wird nun ein Geradeausfahrtsignal erzeugt, das als Führungsgröße für die selbsttätighe Lenkung des Ackerschleppers 40 dienen kann.

Nach einem alternativen Ausführungsbeispiel gemäß Figur 6 und Figur 7 kann der Mähdrescher 2 mit einer aus zwei Ultraschallsensoren 42 gebildeten Sensoreinheit 43 ausgerüstet sein. Die Sensoreinheit 43 ist an einem nach vorne von dem Schneidwerk 3 abragenden Sensortragarm 44 beweglich gelagert. Der Sensortragarm 44 ist über ein Gelenk mit dem Schneidwerk 3 verbunden und kann über eine Tragarmhöhenverstellung 45 aus einer in Figur 6 dargestellten Betriebsstellung in eine untere Transportstellung verschwenkt werden. Die mit dem ersten Ausführungsbeispiel übereinstimmenden Bauteile sind mit denselben Bezugsziffern versehen. Im Unterschied zu dem ersten Ausführungsbeispiel ist die Sensoreinheit 43 an einem quer zur Fahrtrichtung an dem Tragarm 44 angelenkten Haltearm 46 befestigt. Diesen Haltearm 46 umgreift die Sensoreinheit 43 mit einem klammerartigen Befestigungselement 47, daß als Schelle ausgebildet ist und mittels einer Verschraubung 48 an dem Haltearm 46 kraftschlüssig verbindbar ist. Vorteilhaft bewirkt diese Befestigungsart, daß die Sensoreinheit 1 schnell in die Justierposition bringbar ist. Dabei kann die Sensoreinheit 43 gleichzeitig in horizontaler und vertikaler Richtung ausgerichtet werden. Der Haltearm 46 bildet die Schwenkachse für die Ausrichtung in vertikaler Richtung. Durch Verschieben der Sensoreinheit 43 entlang des Haltearms 46 wird die Ausrichtung der Sensoreinheit 43 in horizontaler Richtung bewirkt.

Die Sensoreinheit 43 weist einen ersten Ultraschallsensor 42 auf, der in Fahrtrichtung entlang der Erntegutkante 12 ausgerichtet wird und einen zweiten Ultraschallsensor 42' auf, der in einem spitzen Winkel zu dem ersten Ultraschallsensor 42 steht und auf das Erntegut 5 selbst ausgerichtet wird. Die Ultraschallsensoren 42, 42' sind derart geneigt zum Boden 6 hin ausgebildet, daß ihr Sendesignal in einem Abstand von mehr als vier Metern auf den Boden 6 trifft. Aufgrund der unterschiedlichen Ausrichtung der Ultraschallsensoren 42, 42' kann durch das Verhältnis der jeweiligen Echosignale die Feldbearbeitungskante 12 detektiert werden. In zu dem ersten Ausführungbeispiel entsprechender Weise kann das so gebildete Sensorsignal zur Steuerung oder Regelung des Lenkwinkels eines Lenksystems des Mähdreschers 2 verwendet werden.

Die Justierung der Ultraschallsensoren 42, 42' wird durch einzelne Anzeigelemente 49, die als Leuchtdioden ausgebildet sind, angezeigt. Zur Justierung in vertikaler Ebene sind an einer Seitenwand der Sensoreinheit 43 ein oberes Anzeigeelement 49' und ein unteres Anzeigeelement 49'' angeordnet. Ist die Sensoreinheit 43 auf einen zu großen Abstand zum Boden 6 eingestellt, leuchtet das obere Anzeigelement 49' in roter Farbe. Ist die Sensoreinheit 43 auf einen zu geringen Abstand zum Boden 6 eingestellt, leuchtet das untere Anzeigeelement 49'' in roter Farbe. Ist die Sensoreinheit 43 auf einen korrekten Abstand zu dem Boden 6 eingestellt, leuchten die oberen und unteren Anzeigeelemente 49', 49'' in grüner Farbe. In der Sensoreinheit 43 ist eine Hystereseschaltung integriert, damit ein unerwünschtes Blinken der Anzeigelemente 49', 49'' vermieden wird.

Zur Justierung der Sensoreinheit 43 in horizontaler Richtung ist ein weiteres nicht dargestelltes Anzeigeelement vorgesehen, das bei Ausrichtung des ersten Ultraschallsensors 42 auf die Erntegutkante 12 in grüner Farbe aufleuchtet. Die Ausrichtung in horizontaler Richtung ist nur in Ausnahmefällen erforderlich. Sie kann bereits werksseitig vorgenommen werden, da sie auf die Dimensionen des Schneidwerkes 3 abgestimmt sein muß. Denn das Schneidwerk 3 bildet mit seiner linken Schneidkante eine Vorgabe für die durch dieselbe zu bewirkende Erntegutkante 12. Es reicht daher üblicherweise aus, daß die Sensoreinheit 43 in horizontaler Richtung auf das Schneidwerk 3 ausgerichtet ist. Dadurch, daß der zweite Ultraschallsensor 42' komplett auf das Erntegut 5 gerichtet ist, kann auf einfache Weise ein eindeutiges Sensorsignal zur Detektion der Erntegutkante 12 generiert werden. Die weitere Verarbeitung des Sensorsignals kann in der zu oben beschriebenen ersten Ausführungsform entsprechenden Weise erfolgen.

Die Verarbeitungseinheit 29 kann dazu genutzt werden, per Fernsteuerung die Tragarmhöhenverstellung 45 zu betätigen. Hierdurch kann nach einem vorgegebenen Justierprogramm die Sensoreinheit 43 in vertikaler Richtung verstellt werden. Die Höhe ist daher in Abhängigkeit von der Erntegut- bzw. Getreidehöhe einstellbar. Wesentlich ist, daß der Sensor auf einen bestimmten vorgegebenen Entfernungsbereich eingestellt wird. Die Tragarmhöhenverstellung 45 ist vorzugsweise als druckmittelbetätigbarer Zylinder ausgebildet und kann elektrisch angesteuert werden.

Alternativ kann die Anzeigeeinheit 23 durch einen in einem Steuerhaus des Mähdreschers 2 angeordneten Bildschirmes gebildet sein, der mit einem Mikroprozessor der Verarbeitungseinheit 29 verbunden ist. Der Bildschirm kann vorteilhaft auch für andere Verwendungszwecke, insbesondere zur Anzeige von vorgegebenen Lenkungsarten etc. eingesetzt werden.

## Patentansprüche

1. Verfahren zum Justieren einer an einer Feldmaschine befestigten Sensoreinheit, in der ein Sensorsignal erzeugt wird, das an eine Lenksteuereinheit übertragen wird, so daß die Feldmaschine entlang einer Feldbearbeitungskante bewegt wird, dadurch gekennzeichnet, daß Mittel vorhanden sind, derart, daß die Sensoreinheit (1) selbsttätig an einen Referenzpunkt oder an einer Referenzlinie (12) ausgerichtet wird.

2. Verfahren nach Anspruch 1, dadurch gekennzeichnet, daß die Sensoreinheit (1) mittels einer ferngesteuerten Verstellung (45) in vertikaler und/oder horizontaler Richtung solange bewegt wird, bis der Referenzpunkt oder die Referenzlinie (12) detektiert wird.

3. Verfahren nach Anspruch 1 oder 2, dadurch gekennzeichnet, daß die Bewegung der Sensoreinheit (1) durch eine Anzeigeeinheit (23) signalisiert wird, wobei die Anzeigeeinheit (23) eine von der Lage der Feldmaschine (2) zu der Feldbearbeitungskante (12) abhängige Kennung (26) zur Kennzeichnung der Justierlage aufweist.

4. Verfahren nach einem der Ansprüche 1 bis 3, dadurch gekennzeichnet, daß Anzeigeelemente (25) der Anzeigeeinheit (23) in Abhängigkeit von dem Sensorsignal angesteuert werden, wobei die angesteuerten Anzeigeelemente (25) die Lage der Sensoreinheit (1) in Bezug auf die durch die Kennung (26) vorgegebene Justierlage signalisieren.

5. Verfahren nach einem der Ansprüche 1 bis 4, dadurch gekennzeichnet, daß die Kennung (26) durch einen zentralen Bereich der Anzeigeinheit (23) symbolisiert wird.

6. Justiereinrichtung für eine Sensoreinheit, die an einer Feldmaschine befestigbar ist zum Erkennen einer Feldbearbeitungskante und die ein Sensorsignal erzeugt, das auf eine Lenksteuereinheit einwirkt zur Bewegung der Feldnaschine entlang der erkannten Feldbearbeitungskante, dadurch gekennzeichnet, daß eine optische Anzeigeeinheit (23) mit der Sensoreinheit (1, 43) koppelbar ist, derart, daß in einer Startposition der Feldmaschine die Ausrichtung der Sensoreinheit (1, 43) zu der Feldbearbeitungskante (12) in horizontaler und/oder vertikaler Richtung durch mindestens ein Anzeigeelement (25, 49, 49'') signalisiert wird.

7. Justiereinrichtung nach Anspruch 6, dadurch gekennzeichnet, daß die Sensoreinheit (1, 43) mittels Befestigungselementen (16, 21, 47, 48) kraftschlüssig an einem Tragarm (10, 44) der Feldmaschine (1, 40) festlegbar ist.

8. Justiereinrichtung nach Anspruch 6 oder 7, dadurch gekennzeichnet, daß der Tragarm (10) und/oder die Sensoreinheit (1) einen u-förmigen Ansatz (13, 17) aufweist, derart, daß an den freien Enden des Ansatzes (13, 17) zueinander fluchtende Bohrungen (15) angeordnet sind zur Aufnahme von Schraubmitteln (16), mittels derer die relative Lage der Sensoreinheit (1) zu dem Tragarm (10) um eine durch die Bohrungen (15) hindurchgehende Schwenkachse (20) festlegbar.

9. Justiereinrichtung nach Anspruch 8, dadurch gekennzeichnet, daß die freien Enden des u-förmigen Ansatzes (13, 17) des Tragarms (10) einerseits und der Sensoreinheit (1) andererseits überlappend zueinander angeordnet sind, derart, daß ein Hohlraum gebildet ist zur Aufnahme der Sensoreinheit (1).

10. Justiereinrichtung nach Anspruch 8 oder 9, dadurch gekennzeichnet, daß der u-förmige Ansatz (17) des Tragarms (10) um eine durch die Längsachse des Tragarms (10) gebildete Drehachse (27) drehbar an dem Tragarm (10) gelagert ist.

11. Justiereinrichtung nach einem der Ansprüche 6 bis 10, dadurch gekennzeichnet, daß mindestens eine Reihe der Anzeigeelemente (23) sich in Richtung der Drehachse (27) des u-förmigen Ansatzes (17) erstreckt.

12. Justiereinrichtung nach einem der Ansprüche 6 bis 11, dadurch gekennzeichnet, daß der Tragarm (44) langgestreckt ausgebildet ist und an einem hinteren Bereich des Schneidwerks (3) an demselben schwenkbar gelagert ist, wobei der Tragarm (44) oberhalb und parallel zu einer sich in Fahrtrichtung erstreckenden linken Wandung des Schneidwerks (3) verläuft.

13. Justiereinrichtung nach Anspruch 12, dadurch gekennzeichnet, daß der Tragarm (44) eine sich quer zur Fahrtrichtung erstreckenden Haltearm (46) aufweist, an dem die Sensoreinheit (43) längsverschieblich gelagert ist.

14. Justiereinrichtung nach einem der Ansprüche 6 bis 13, dadurch gekennzeichnet, daß die Anzeigeeinheit (23) mehrere in einer Reihe angeordnete Anzeigeelemente (25) aufweist, die sich parallel oder entlang der Schwenkachse (20) und/oder der Drehachse (27) erstrecken.

15. Justiereinrichtung nach Anspruch 14, dadurch gekennzeichnet, daß jeder Reihe von Anzeigeelementen (25) zwei Anzeigeelemente (25) zugeordnet sind, die in Abhängigkeit von der Lage der Sensoreeinheit (1) aufleuchten, und daß die Anzeigeelemente (25) einer Reihe derart angesteuert werden, daß mindestens ein mittleres Anzeigeelement (25) der Reihe von Anzeigeelementen (25) in der einzustellenden Justierlage aufleuchtet.

16. Justiereinrichtung nach einem der Ansprüche 6 bis 15, dadurch gekennzeichnet, daß zwei Reihen von Anzeigeelementen (25) vorgesehen sind, die jeweils in einem mittleren Bereich unterbrochen sind zur Bildung eines gemeinsamen Mittelpunktes (26), und daß die einzustellende Justierlage an den Mittelpunkt (26) angrenzende Anzeigeelemente (25) signalisierbar ist.

17. Justiereinrichtung nach einem der Ansprüche 6 bis 16, dadurch gekennzeichnet, daß die Anzeigeeinheit (23) unmittelbar an einer Rückseite der Sensoreinheit (1) angeordnet ist.

18. Justiereinrichtung nach einem der Ansprüche 6 bis 17, dadurch gekennzeichnet, daß die Anzeigeeinheit (23) in einem Steuerhaus der Feldmaschine (2) angeordnet ist.

19. Justiereinrichtung nach einem der Ansprüche 6 bis 18, dadurch gekennzeichnet, daß die Sensoreinheit (1) durch eine Fernsteuerung in ihrer Position veränderbar ist und daß die Einstellung der Justierlage durch Anzeige mittels eines Bildschirms visualisierbar ist.
